Europäisches Patentamt

European Patent Office

Office européen des brevets

(19)

(11) Publication number: **0 324 884**

**A1**

(12) **EUROPEAN PATENT APPLICATION**

(21) Application number: **88100883.3**

(51) Int. Cl.⁴: **B60Q 1/44**

(22) Date of filing: **21.01.88**

(43) Date of publication of application:
**26.07.89 Bulletin 89/30**

(84) Designated Contracting States:
**DE FR GB IT NL SE**

(71) Applicant: **Liang, Davis**
**No. 3, Lane 7, Tung-te Street Pei-tou**
**Taipei(TW)**

Applicant: **Liang, Tien-Sheng**
**No. 3, Lane 7, Tung-te Street Pei-tou**
**Taipei(TW)**

(72) Inventor: **Liang, Davis**
**No. 3, Lane 7, Tung-te Street Pei-tou**
**Taipei(TW)**
Inventor: **Liang, Tien-Sheng**
**No. 3, Lane 7, Tung-te Street Pei-tou**
**Taipei(TW)**

(74) Representative: **Kador & Partner**
**Corneliusstrasse 15**
**D-8000 München 5(DE)**

(54) **Dynamic safety indicator for vehicle.**

(57) This invention relates to a dynamic safety indicator for a vehicle and in particular to one including a set of indicating lamps composing by a red 5, a yellow 4 and a green 3 lamps, a microswitch 1 and a relay 2. By the stroke of the accelerator pedal 6 which drives the microswitch 1 and the relay 2, different dynamic conditions of the vehicle can be indicated clearly. As the vehicle is starting, the yellow lamp 4 is lighted. When the accelerator pedal 6 is pressed, the green lamp 3 glows, and while the brake is applied, the red lamp 5 gives light thus ensuring safety for the vehicle.

FIG 1.

EP 0 324 884 A1

## DYNAMIC SAFETY INDICATOR FOR VEHICLE

### BACKGROUND OF THE INVENTION

This invention relates to a dynamic safety indicator for a vehicle which is designed to indicate the dynamic conditions of a vehicle. The said indicator includes a set of indicating lamps (red, yellow and green), a microswitch and a relay to indicate the dynamic conditions of a vehicle by the movement of the accelerator pedal.

In modern life, the progress of civilization and the dissemination of knowledge and technology of industrial science urge industrial productivity increases and the improvement of living conditions makes vehicles such as automobile and motorcycles become daily means of transportation. However, the rapid development of industry and commerce introduces traffic congestion and thus increases traffic accidents. Although all vehicles are equipped with traditional brake lights, still, traffic accidents occur frequently for a brake lamp lights only at the time when a vehicle is braking. However, when one is driving in high speed on a highway and suddenly notices the brake lights of the car in front of him is lighted, the time left for him to take any corresponding braking is very short because it needs time to transmit a visual signal from his eyes to his brain and change it to muscular function of his foot to brake a vehicle; thus collision can hardly be avoided.

### SUMMARY OF THE INVENTION

This invention, after research and analysis of traditional tail lamps of vehicles, finally invents the present invention.

It is the primary object of the present invention to provide a dynamic safety indicator indicating alternatively the starting, accelerating and braking conditions of a vehicle.

### BRIEF DESCRIPTION OF THE DRAWING

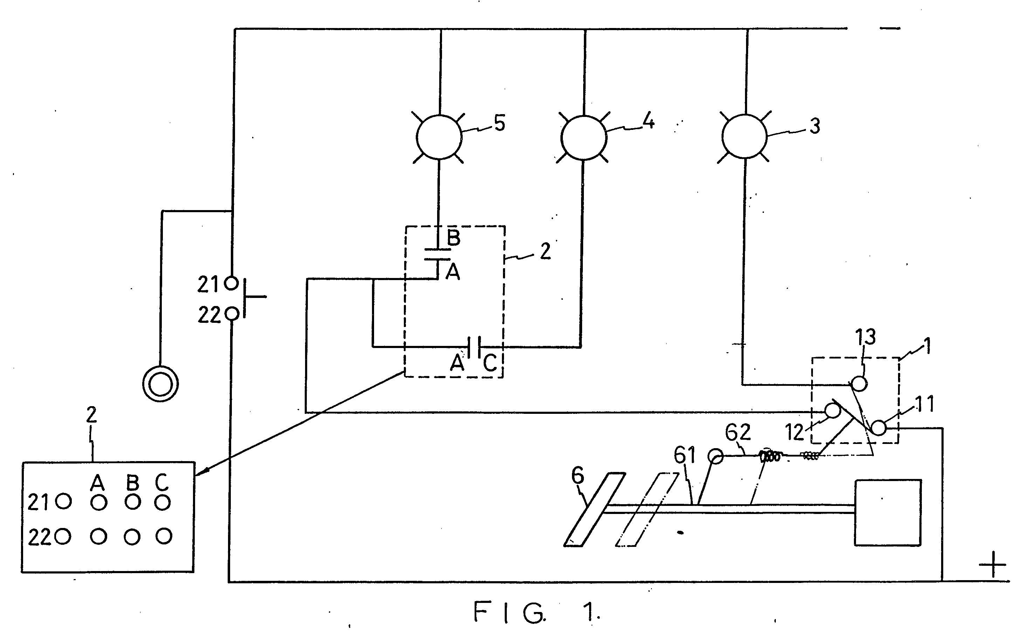

FIG. 1 is an electrical circuit of the present invention.

### DETAILED DESCRIPTION OF THE PREFERRED EMBODIMENT

With reference to FIG. 1, the dynamic safety indicator for a vehicle according to the present invention mainly comprises a microswitch 1, a relay 2 and three indicating lamps 3, 4 and 5 wherein the microswitch 1 is connected to the connecting rod 61 of the accelerator pedal 6. The indicating lamp 3 is green, 4 is yellow, and 5 is red in color. This set of lamps is mounted at the top of the back seat of a vehicle so that the driver of the following vehicle can notice these indicating lamps easily. The + and - terminals of the said indicator are connected to the main switch of the vehicle. The connecting points 21 and 22 of the relay are connected to the brake pedal. When one starts the vehicle, electricity flows through the connecting points 12 and 11 of the microswitch to the connecting points A and C of the relay, thus causing the yellow lamps of the said indicator to give light. When the accelerator pedal 6 is pressed and the vehicle reaches a certain speed (the pedalling force exceeds the elastic force of the spring 62 of the connecting rod 61) as shown by the dotted lines of the drawing, the connecting points 11, 12 of the microswitch are disconnected and the connecting points 11 and 13 are then connected thereby lighting the green lamp. In reverse, when the vehicle is retarded to a certain speed, the green lamp is turned off and the yellow lamp is turned on. When the brake is applied, the connecting points 21 and 22 of the relay 2 are connected so that A and C are disconnected but A and B are connected thus causing the indicating lamp 5 to give light.

Therefore, when an indicator of the present invention is mounted at the top of the back seat of a vehicle, the driver of the following vehicles can notice the dynamic conditions of the front car clearly, that is, a lighted green lamp shows that the front car is accelerating, a lighted yellow lamp shows that the front car is retarding or to be braked thus precaution can be made to the drivers of the following cars and a lighted red lamp shows that the front vehicle is braking. The above indications can ensure a safe driving easily.

### Claims

1. A dynamic safety indicator for a vehicle comprising a red lamp, a yellow lamp, a green lamps, a microswitch, a relay and a connecting rod for an accelarator pedal, characterized in that a springloaded pedalling rod is connected at an appropriate position of the accelarator with the microswitch, and a brake of the vehicle is mounted at connecting points of the relay whereby as the vehicle is started, the green lamp is lighted; when the accelerator pedal is pressed, the green lamp glows; and while the brake is applied, the red lamp gives light thereby ensuring safety therefor.

F I G. 1.

EP 0 324 884 A1

European Patent
Office

**EUROPEAN SEARCH REPORT**

Application Number

EP 88 10 0883

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 698 403 (WOODHAM) <br> * Column 1, lines 34-76 * <br> --- | 1 | B 60 Q 1/44 |
| A | FR-A-2 398 642 (VISEUR) <br> * Page 4, figure * <br> --- | 1 | |
| A | FR-A-2 301 411 (LEAUMONT) <br> * Page 4 * <br> --- | 1 | |
| A | US-A-4 667 177 (ATHALYE) <br> * Abstract; figures 2B,3B * <br> ----- | 1 | |

TECHNICAL FIELDS
SEARCHED (Int. Cl.4)

B 60 Q

The present search report has been drawn up for all claims

| Place of search | Date of completion of the search | Examiner |
|---|---|---|
| THE HAGUE | 15-09-1988 | ONILLON C.G.A. |